Europäisches Patentamt

**European Patent Office**

**Office européen des brevets**

(19)

(11) Publication number: **0 120 157**

**A1**

(12) **EUROPEAN PATENT APPLICATION**

(21) Application number: **83304031.4**

(22) Date of filing: **12.07.83**

(51) Int. Cl.³: **F 16 B 15/02**
**B 21 G 3/12**
**//F16B15/08**

(30) Priority: **24.03.83 GB 8308145**

(43) Date of publication of application:
**03.10.84 Bulletin 84/40**

(84) Designated Contracting States:
**AT BE CH DE FR IT LI LU NL SE**

(71) Applicant: **Rylands-Whitecross Limited**
**P.O. Box 29 Battersby Lane**
**Warrington Cheshire WA1 2TW(GB)**

(72) Inventor: **Lomax, Ronald**
**36 Broad Oak Avenue Penketh**
**Warrington Cheshire(GB)**

(74) Representative: **Lyons, Andrew John et al,**
**ROYSTONS 531 Tower Building Water Street**
**Liverpool L3 1BA(GB)**

(54) Improvements in or relating to nails and their method of manufacture.

㊼ There is disclosed a nail (10) of T-configuration having an elongate shank (12) of oval cross-sectional shape having major (22) and minor (24) transverse axes and a head (16) projecting laterally from the shank by a greater extent in both directions along the major axis than along the minor axis.

There is also disclosed a method of making such a nail.

FIG.1

FIG.3

EP 0 120 157 A1

Title:   Improvements in or relating to nails and their
method of manufacture


DESCRIPTION


This invention relates to nails, and to a method of making same, and is applicable especially but not exclusively, to nails for use with magazine fed nailing machines.

In such machines the nails are collated into strips, usually with their shanks abutting, and are fed to a reciprocating hammer member which strikes each nail in turn, separating it from the strip and driving it into the workpiece.   In order for a nailing machine to hold a large number of nails, so that it need not be replenished frequently, nails having a shank of oval cross-sectional shape with a head that does not project beyond the shank at one side thereof have been proposed in our Patent Specification No. 2078894A so that the nails can be collated side-by-side with the minor axis of each shank in line in a flat strip.   Such collation means that a large number of nails can be provided in one strip for a nailing machine  whilst the major axis provides shank strength greater than heretofore used nails of circular shank section.

Nail collation is usually carried out in a machine that sorts the nails into the correct orientation for subsequent alignment and bonding together by, for example, epoxy resin applied to their sides or by lengths of self-adhesive tape or wire. The orientation part of the collating machine comprises a vibratory slide having a lengthwise slot, the nails having their shanks depending through the slot and the nail head resting on the upper surfaces of the slot sides. The slot is sized so that the nails are orientated with their major axis in line with the slot. Vibration of the slide moves the nails downwards to a unit which orientates each nail onto a moving band for bonding, the nails now being arranged side-by-side with their shank major axis parallel.

A difficulty, however, arises, with regard to nails of T-configuration in which the nail head is a transverse member no greater in width than the minor dimension of the oval shank in that these nails tend to slip out of the collating machine vibratory slide.

The object of this invention is to provide a nail whose use is less likely to suffer from the above- mentioned difficulty.

According to a first aspect of this invention there is provided a nail of T-configuration having an elongate shank of oval cross-sectional shape having major and minor transverse axes and a head projecting laterally from the shank by a greater extent in both directions along the major axis than along the minor axis.

Whilst the lesser projection of the head will not permit side-by-side shank contacting collation of such nails, nevertheless satisfactory collection is still possible, particularly with heads overlapping in stepped relation.

The projection of the head in the direction of the minor axis is preferably the full length of the head e.g. the head may be generally rectangular.

The extent to which the head projects beyond the shank in the direction of the major shank axis may be as is usual for T-configuration nails. The extent of projection in the direction of the minor shank axis need only be sufficient to prevent slipping of the nails out of a collating machine slide but is preferably not so large as to inhibit satisfactory collation.

According to a second aspect of this invention there is provided a method of making a nail of the first aspect which includes the step of forming at one end of a shank of oval cross-sectional shape, having major and minor transverse axes, a head projecting laterally from the shank by a greater extent in both directions along the major axis than along the minor axis.

Preferably the head is formed by upsetting an end of the shank projecting from a die.

In a preferred embodiment the end projects into a slot defining the desired head dimensions and a punch acts into the slot to upset the projecting end to form the head.

This invention will now be further described, by way of example only, with reference to the accompanying drawings in which:-

Figures 1, 2 and 3 are respectively end, side and plan views of a nail; and

Figure 4a shows a die and punch for forming the head of a nail of Figures 1 to 3;

Figure 4b shows the acting face of the punch;

Figure 4c is a plan view of the die; and

Figure 4d is a section along line AA of Figure 4c.

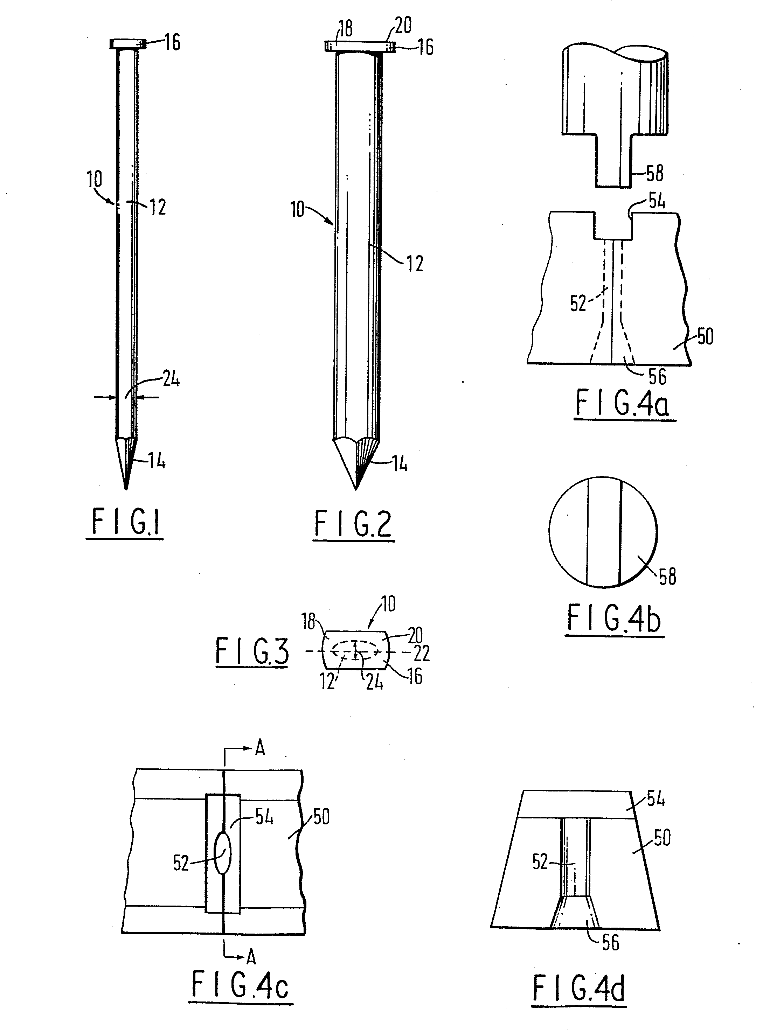

Referring to Figures 1 to 3, a steel nail 10 of T-configuration comprises a shank 12, of oval-cross-section, having a point 14 at one end and a head 16 at the other.

The "T" head 16 comprises limbs 18 and 20 projecting transversely to the shank in the direction of the major axis 22 of the shank. The head 16 is slightly wider than the minor diameter 24 of the shank projecting transversely thereof on both sides.

Nails of the type shown in Figures 1 to 3 may be collated with heads overlapping in a stepped relation preferably being bonded with self-adhesive tape.

Turning to Figures 4a to d a die 50 has a through hole 52 of oval cross-section communicating at one end with a slot 54 and having a divergent hole 56 at its other end. In use oval wire stock is fed through the hole 52 to protrude into slot 54 and the protruding end upset by punch 58 to form the head. The slot 54 defines the length and width of the head and its height will depend on the amount of material to be upset and the action of punch 58.

## CLAIMS

1. A nail of T-configuration having an elongate shank of oval cross-sectional shape having major and minor transverse axes and a head projecting laterally from the shank by a greater extent in both directions along the major axis than along the minor axis.

2. A nail as claimed in claim 1 wherein the projection of the head in the direction of the minor axis is for the full length of the head.

3. A nail as claimed in claim 2 wherein the head is generally rectangular.

4. A nail as claimed in claim 1, 2 or 3, wherein the extent of projection of the head in the direction of the minor shank axis is sufficient to prevent slipping of the nail out of a collating machine slide.

5. A method of making a nail comprising the step of forming at one end of a shank of oval cross-sectional shape, having major and minor transverse axes, a head projecting laterally from the shank by a greater extent in both directions along the major axis than along the minor axis.

6. A method as claimed in claim 5 wherein the head is formed by upsetting an end of the shank projecting from a die.

7.    A method as claimed in claim 6 wherein said end projects into a slot defining desired head dimensions and a punch acts into the slot to upset the projecting end to form the head.

0120157

1/1

F I G.1

F I G.2

F I G.3

F I G.4a

F I G.4b

F I G.4c

F I G.4d

## DOCUMENTS CONSIDERED TO BE RELEVANT

EP 83304031.4

| Category | Citation of document with indication, where appropriate, of relevant passages | Relevant to claim | CLASSIFICATION OF THE APPLICATION (Int. Cl. ³) |
|---|---|---|---|
| D,X | EP - A1 - 0 042 657 (RYLANDS-WHITECROSS LIMITED)<br>* Claims; fig. 1,2,4,12a-13c *<br>& GB-A-2 078 894<br>-- | 1-7 | F 16 B 15/02<br>B 21 G 3/12//<br>F 16 B 15/08 |
| A | US - A - 3 095 588 (DIETER HAUBOLD)<br>* Column 2, lines 8-11, 21-25, 35; fig. 1-3 *<br>-- | 1-3, 5-7 | |
| A | GB - A - 1 020 888 (POWERS WIRE PRODUCTS CO., INC.)<br>* Claims 1,2; fig. 1,3,6,7 *<br>-- | 1-3,5 | |
| A | US - A - 1 898 286 (ALBERT BRADLEY)<br>* Page 2, lines 7,8; fig. 3,4 *<br>-- | 1,5 | **TECHNICAL FIELDS SEARCHED (Int. Cl. ³)**<br><br>F 16 B 15/00 |
| A | US - A - 583 946 (CHARLES B. RUSSEL)<br>* Page 2, lines 35-44 *<br>-- | 1,5 | B 21 G 3/00 |
| A | US - A - 1 443 527 (SOLOMON M. CUTTER)<br>* Fig. *<br>---- | 1 | |

The present search report has been drawn up for all claims

| Place of search | Date of completion of the search | Examiner |
|---|---|---|
| VIENNA | 22-05-1984 | REIF |